Europäisches Patentamt

European Patent Office

Office européen des brevets

(19)

(11) Publication number: **0 047 748**
**B1**

(12)

# EUROPEAN PATENT SPECIFICATION

(45) Date of publication of patent specification: **25.07.84**　(51) Int. Cl.³: **F 24 H 1/00**

(21) Application number: **81900151.2**

(22) Date of filing: **19.12.80**

(86) International application number:
**PCT/SE80/00342**

(87) International publication number:
**WO 81/01874 09.07.81 Gazette 81/16**

(54) METHOD AND APPARATUS FOR TRANSFERRING HEAT FROM WASTE WATER FROM A BUILDING.

(30) Priority: **19.12.79 SE 7910472**

(43) Date of publication of application:
**24.03.82 Bulletin 82/12**

(45) Publication of the grant of the patent:
**25.07.84 Bulletin 84/30**

(84) Designated Contracting States:
**AT CH DE FR GB LI NL**

(56) References cited:
**SE - B - 406 226**

(73) Proprietor: **REDERIAKTIEBOLAGET
NORDSTJERNAN
Stureplan 3 Box 7848
S-103 99 Stockholm (SE)**

(72) Inventor: **ARCHER, John
Sälgstigen 4
S-149 00 Nynäshamn (SE)**
Inventor: **HAKANSSON, Sven
Centralgatan 47
S-149 00 Nynäshamn (SE)**
Inventor: **JÖNSSON, Kurt
Björkstigen 8
S-149 00 Nynäshamn (SE)**

(74) Representative: **Jacobsson, Rune
JACOBSSON & BILLBERG PATENTBYRA AB Box
21113
S-100 31 Stockholm 21 (SE)**

Courier Press, Leamington Spa, England.

## Description

The present invention relates to a method and an apparatus for transferring heat from waste water from a building to service water to the building by utilizing the heat pipe principle.

Heat pipes have been used in many applications including both cooling and heating. Heat pipes are built up as a closed circulation system, in which the heat is transported continuously by means of a volatile heat transferring medium from one place, the vaporization place, to another place, the condensation place, in the system. The heat transferring medium is self-circulating; no pump is required. If the condensation place is located at a higher level than the vaporization place, the heat transport can only take place in one direction, namely from below and upwards.

In the SE—B—406 226 (and DE—A—2754981) the use of the heat pipe principle for the recovery of heat in waste water is disclosed. In conformity herewith the present invention relates to a method for transferring heat from the waste water of a building to its incoming service water by means of a heat transferring medium self-circulating in a closed pipe system between a vaporization place, through which the waste water flows, and a condensation place, through which the service water flows and which is located at a higher level than the vaporization place, wherein the transferring medium is vaporized at the vaporization place and flows from this place in vapor phase to the condensation place, is condensed at the condensation place during heat emission for said heat transfer and flows in fluid phase back to the vaporization place.

The present invention is an improvement of such a method in order to essentially increase the efficiency of the heat transfer. A number of experiments with different embodiments for utilizing such a method have proved, that the configuration of the vaporization place, i.e. the heat transfer from the waste water, is of particular importance to the efficiency, and the present invention provides for said purpose a special method for this heat transfer.

In this respect the present invention is characterized by feeding the waste water to the vaporization place where there are substantially undisturbed layer zones comprising layers of temperature in the waste water with the top layer being warmer than the bottom layer and transferring from said layer zones heat from the waste water to the service water independently of each other.

Thus, the absorption of heat from the waste water shall according to the invention take place in at least two layers (level zones). A natural zoning of warm water uppermost and cold water towards the bottom takes place in a vessel, unless flows disturb this zoning. It is accordingly in order to obtain the required zoning essential, that such disturbing flows which result in a mixing of the upper warmer waste water with the lower cold waste water are avoided. The inflow of the waste water must therefor, according to the invention, take place in such a manner, that the waste water has the possibility to be zoned. The waste water should be fed into the vaporization place below the level of the waste water therein and in a preferred method, according to the invention, the waste water is for zone-promoting purposes supplied to the vaporization place in a substantially horizontal direction, wherein moreover the waste water preferably is supplied tangentially. Preferably according to the invention the kinetic energy of the waste water should also be damped immediately before or at the intake into the vaporization place.

In a preferred method according to the invention the heat transfer takes place in each of said zones along a substantially horizontal plane. The condensate of the heat transferring medium should accumulate covering a relatively large area in said plane so that the vaporization of the heat transferring medium is promoted.

As previously mentioned the present invention also relates to an apparatus for carrying out the method. The apparatus according to the invention includes a waste water vessel, a service water vessel located at a higher level than the waste water vessel and a self-circulating heat transfer medium in a closed pipe system between said vessels and the heat transfer medium is vaporized in the waste water vessel and is condensated in the service water vessel. In order to obtain the above mentioned advantageous configuration of the vaporization place, i.e. the waste water vessel, in said purposes to obtain the essentially increased efficiency compared with previously known technic, the apparatus according to the invention is characterized by layer-promoting means to obtain essentially undisturbed zoning into temperature layers in the waste water vessel with an upper layer zone of warmer waste water than the lower layer zone and at least two separate pipe circuits for the heat transferring medium arranged with the heat-absorbing parts of the pipe circuits in the waste water vessel spaced apart vertically with at least one of said pipe circuit parts in each layer zone.

In a preferred embodiment of the invention said layer-promoting means for the incoming waste water comprises of a tangentially connected inlet pipe, preferably having a channel in the wall of the vessel successively leading into the vessel. In another embodiment said layer-promoting means comprises of a partition wall extending into the waste water vessel substantially horizontally, said wall covering an essential part of the inner area of the vessel. The partition wall is located such that it separates the zones in which the heat absorption to said pipe circuits takes place.

In a preferred embodiment of the invention said heat-absorbing pipe circuits in the waste water vessel are formed as a substantially plane spiral. Such a plane spiral utilizes the pipe length effectively due to the fact that condensate is present in the total pipe length in the spiral.

The invention is in the following described with reference to the accompanying drawings which schematically illustrate the principle for a preferred embodiment of the invention, wherein:

Figure 1 is a vertical section through the preferred embodiment; and

Figure 2 is a section along II—II in Figure 1.

A waste water vessel 1 is arranged for receiving waste water from a building that has vuluable heat content, such as, for example, the discharge from clothes washing machines, dish washing machines, bathrooms and the like. The waste water is conducted into the vessel as shown by the arrow A and is discharged at the bottom of the vessels as shown by the arrow B. The waste water supplied to the vessel through the vertical pipe 2 loses a part of its kinetic energy when it meets the waste water level in the pipe 2 and also by the perpendicular deflection to the horizontal in tangential inlet 3. Hereby, the waste water can after entering vessel 1 be zoned so that waste water than is warmer than that inside the inlet 3 rises on entering the vessel and colder waste water sinks downward, and this takes place without disturbing the zoning. In the upper warmer layer or zone as well as in the lower colder zone, heat pipe loops 4a and 4b, respectively, are each arranged in a substantially horizontal plane. The pipe loops are preferably formed as a substantially plane spiral.

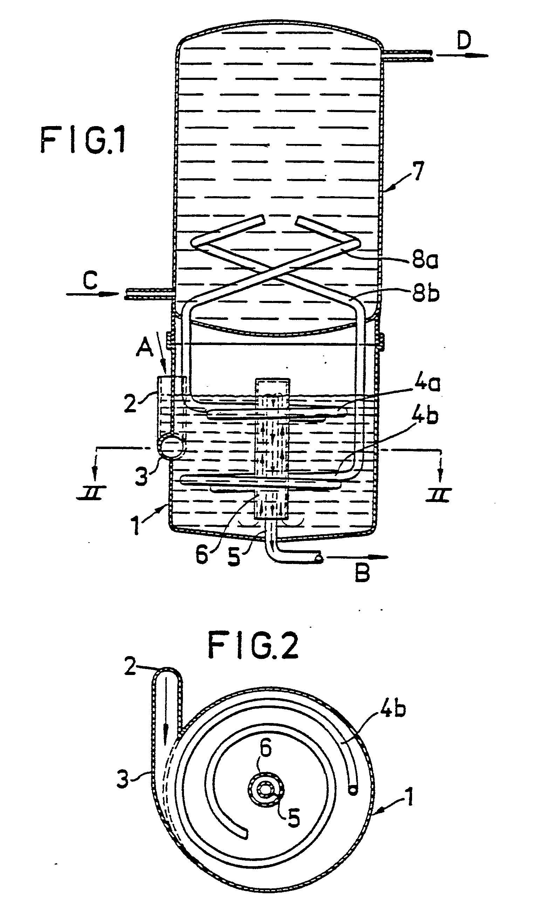

The outlet for the waste water may preferably be formed as a level-maintaining device and such a device is shown in Figure 1 as an outlet pipe 5 having the outlet opening positioned at a desired level in the waste water vessel 1. A wall or pipe 6 shields the outlet opening of the pipe 5 so that only the colder bottom water flows to the outlet.

An upper vessel 7 is positioned at a higher level above the waste water vessel 1. Heat from the warm waste water flowing through the waste water vessel shall be transferred to the contents of vessel 7. Vessel 7 can for instance be a water heater or the contents of the vessel can be fresh water coming into the building, the fresh water of which shall be pre-heated. The fresh water enters the vessel at the bottom as shown by the arrow C and is discharged at the top as shown by the arrow D. The heat pipe loops 4a, 4b in the waste water vessel are connected to screw-line-formed loops 8a, 8b in the fresh water vessel.

Distilled water, freon, ammonia or like liquids having high vaporization heat are used as heat transferring medium in these heat pipe loops. The amount of medium is adapted such that optimum heat transfer effect is obtained. The air is evacuated so that only the pressure of the heat transferring medium in the pipe is present for the respective temperature. The pipes should be made of metal, for instance copper.

**Claims**

1. A method for transferring heat from the waste water from a building to its incoming service water by means of a heat transferring medium which is self-circulating in a' closed pipe system between a vaporization place, through which the waste water flows, and a condensation place, through which the service water flows and which is located on a higher level than the vaporization place, wherein the transferring medium is vaporized at the vaporization place and flows therefrom in vapor phase to the condensation place, is condensed at the condensation place during heat emission for said heat transfer and flows in liquid phase back to the vaporization place, characterized by feeding (A) the waste water to the vaporization place (1) without substantially disturbing the existing layer zoning therein, in which layer zoning of the waste water has the top layer zone warmer waste water than the bottom layer zone, and transferring from said layer zones heat from the waste water to the service water independently of each other.

2. A method according to claim 1, characterized in that the waste water is supplied (A) to the vaporization place (1) in substantially horizontal direction.

3. A method according to claim 2, characterized in that the waste water is supplied (A) to the vaporization place (1) tangentially.

4. A method according to any of the preceding claims, characterized by damping the kinetic energy of the waste water supplied to the vaporization place (1).

5. A method according to any of the preceding claims, characterized in that the heat transfer in each of said layer zones takes place on a substantially horizontal plane.

6. An apparatus for transferring heat from waste water contained in a waste water vessel (1) to service water contained in a service water vessel (7) located on a higher level than the waste water vessel by means (4, 8) of self-circulating heat transfer medium flowing in a closed pipe system between said vessels, said heat transfer medium being vaporized in the waste water vessel and condensated in the service water vessel, characterized by layer-promoting means (2, 3) to obtain substantially undisturbed division into zones of the waste water in the waste water vessel (1) with an upper layer zone having warmer waste water than the lower layer zone, and at least two separate pipe circuits (4a, 8a; 4b, 8b) for the heat transferring medium arranged with the heat absorbing parts (4a; 4b) of the pipe circuits in the waste water vessel (1) spaced vertically apart with at least one of said pipe circuit parts in each layer zone.

7. An apparatus according to claim 6, characterized in that said layer-promoting means comprises an inlet (2, 3) for the waste water to the waste water vessel formed as a channel tangentially connected to the waste water channel.

8. An apparatus according to claim 6, characterized in that said layer-promoting means comprises a partition wall arranged substantially horizontal in the waste water vessel (1), said wall covering an essential part of the inner area of the vessel.

9. An apparatus according to any of the claims 6—8, characterized in that said heat-absorbing pipe circuit part (4a; 4b) is arranged substantially horizontally.

10. An apparatus according to claim 9, characterized in that said heat-absorbing pipe circuit part (4a; 4b) is formed as a substantially plane spiral.

## Revendications

1. Procédé de transfert de la chaleur de l'eau usée d'un immeuble à son eau de service entrante, au moyen d'un fluide de transfert de chaleur en autocirculation dans une canalisation en circuit fermé entre un endroit de vaporisation, à travers lequel circule l'eau usée, et un endroit de condensation, à travers lequel circule l'eau de service et qui est placé à un niveau plus élevé que celui de l'endroit de vaporisation, de sorte que le fluide de transfert est vaporisé dans l'endroit de vaporisation, s'écoule en phase vapeur de cet endroit à l'endroit de condensation, est condensé à l'endroit de condensation pendant l'émission de chaleur pour le transfert de chaleur et s'écoule en phase liquide pour revenir à l'endroit de vaporisation, caractérisé en ce qu'il consiste à amener l'eau usée (A) à l'endroit de vaporisation (1) sensiblement sans perturber la répartition en couches existant à cet endroit, cette répartition de l'eau usée comprenant une couche supérieure d'eau usée plus chaude que la couche inférieure, et à transférer la chaleur des dites couches, de l'eau usée à l'eau de service, indépendamment l'une de l'autre.

2. Procédé suivant la revendication 1, caractérisé en ce que l'eau usée (A) est amenée à l'endroit de vaporisation (1), en direction sensiblement horizontale.

3. Procédé suivant la revendication 2, caractérisé en ce que l'eau usée (A) est amenée à l'endoit de vaporisation (1), tangentiellement.

4. Procédé suivant l'une quelconque des revendications précédentes, caractérisé en ce qu'il comprend la dissipation de l'énergie cinétique de l'eau usée amenée à l'endroit de vaporisation (1).

5. Procédé suivant l'une quelconque des revendications précédentes, caractérisé en ce que le transfert de chaleur dans chacune des zones s'effectue dans un plan sensiblement horizontal.

6. Appareil de transfert de la chaleur de l'eau usée, contenue dans une cuve (1) d'eau usée, à l'eau de service contenue dans une cuve (7) d'eau de service placée à un niveau plus élevé que la cuve d'eau usée, au moyen d'un fluide de transfert de chaleur en auto-circulation dans un circuit fermé de canalisation (4, 8) entre les dites cuves, le fluide de transfert de chaleur étant vaporisé dans la cuve d'eau usée et condensé dans la cuve d'eau de service, caractérisé en ce qu'il comprend des moyens (2, 3) de manière à obtenir et favoriser une répartition sensiblement non perturbée en zones de l'eau usée dans la cuve (1) d'eau usée, avec une couche supérieure d'eau usée plus chaude que la couch inférieure, et au moins deux circuits séparés de canalisation (4a, 8a; 4b, 8b) pour le fluide de transfert de chaleur, les parties (4a, 4b) d'absorption de chaleur des circuits de canalisation dans la cuve (1) d'eau usée étant espacées verticalement l'une de l'autre, avec au moins l'une des dites parties de circuit de canalisation, située dans chaque couche.

7. Appareil suivant la revendication 6, caractérisé en ce que les moyens favorisant la répartition comprennent une entrée (2, 3) d'eau usée dans la cuve d'eau usée, sous la forme d'un canal raccordé tangentiellement à la cuve d'eau usée.

8. Appareil suivant la revendication 6, caractérisé en ce que les moyens favorisant la répartition comprennent une paroi de séparation disposée sensiblement horizontalement dans la cuve (1) d'eau usée, cette paroi recouvrant une partie principale de la surface intérieure de la cuve.

9. Appareil suivant l'une quelconque des revendications 6 à 8, caractérisé en ce que la dite partie d'absorption de chaleur (4a; 4b) du circuit de canalisation est disposé sensiblement horizontalement.

10. Appareil suivant la revendication 9, caractérisé en ce que la dite partie d'absorption de chaleur (4a; 4b) des circuits de canalisation est sous la forme d'une spirale sensiblement plane.

## Patentansprüche

1. Verfahren zum Übertragen von Wärme aus dem Abwasser eines Gebäudes auf das zufließende Betriebswasser des Gebäudes mit Hilfe eines Wärmeübertragungsmittels, das in einem geschlossenen Rohrleitungssystem selbsttätig umläuft zwischen einem Verdampfungsort, durch den das Abwasser strömt, und einem Kondensationsort, durch den das Betriebswasser strömt und der höher gelegen ist als der Verdampfungsort, wobei das Übertragungsmittel am Verdampfungsort verdampft wird und von diesem Ort in Dampfform zu dem Kondensationsort fließt, an dem Kondensationsort unter Wärmeabgabe zur Wärmeübertragung kondensiert wird und als Flüssigkeit zu dem Verdampfungsort zurückfließt, dadurch gekennzeichnet, daß das Abwasser dem Verdampfungsort (1) zugeleitet wird (A), ohne die darin ausgebildeten Schichtbereiche wesentlich zu stören, bei welcher Schichtbereichsbildung in dem Abwasser der obere Schichtbereich wärmeres Abwasser enthält als der untere Schichtbereich, und daß aus den Schichtbereichen unabhängig voneinander Wärme aus dem Abwasser in das Betriebswasser übertragen wird.

2. Verfahren nach Anspruch 1, dadurch gekennzeichnet, daß das Abwasser dem Verdampfungsort (1) im wesentlichen in waagerechter Richtung zugeführt wird (A).

3. Verfahren nach Anspruch 2, dadurch gekennzeichnet, daß das Abwasser dem Verdampfungsort (1) tangential zugeführt wird (A).

4. Verfahren nach einem der vorhergehenden Ansprüche, dadurch gekennzeichnet, daß die kinetische Energie des dem Verdampfungsort (1) zugeführten Abwassers herabgesetzt wird.

5. Verfahren nach einem der vorhergehenden Ansprüche, dadurch gekennzeichnet, daß die Wärmeübertragung in jedem Schichtbereich auf einer im wesentlichen waagerechten Ebene abläuft.

6. Vorrichtung zum Übertragen von Wärme aus dem in einem Abwasserbehälter (1) enthaltenen Abwasser in das in einem oberhalb des Abwasserbehälters (1) angeordneten Betriebswasserbehälter (7) befindliche Betriebswasser mit Hilfe (4, 8) eines selbsttätig umlaufenden Wärmeübertragungsmittels, das in einem geschlossenen Rohrleitungsschliefensystem zwischen diesen Behältern fließt, wobei das Wärmeübertragungsmittel in dem Abwasserbehälter verdampft und in dem Betriebswasserbehälter kondensiert wird, gekennzeichnet durch eine schichtbildende Einrichtung (2, 3) zum Herbeiführen einer im wesentlichen ungestörten Unterteilung des in dem Abwasserbehälter (1) befindlichen Abwassers in Zonen mit einem oberen Schichtbereich von Abwasser, das wärmer ist als das des unteren Schichtbereichs, und durch mindestens zwei getrennte Rohrleitungsschleifen (4a, 8a; 4b, 8b) für das Wärmeübertragungsmittel, wobei die wärmeaufnehmenden Teile (4a; 4b) der Rohrleitungsschleifen in dem Abwasserbehälter (1) Abstand in vertikaler Richtung voneinander haben und sich in jedem Schichtbereich mindestens jeweils einer der Rohrleitungsschliefenteile befindet.

7. Vorrichtung nach Anspruch 6, dadurch gekennzeichnet, daß die schichtbildende Einrichtung einen Einlaß (2, 3) für das Abwasser in den Abwasserbehälter aufweist und als tangential an den Abwasserbehälter anschließender Kanal ausgebildet ist.

8. Vorrichtung nach Anspruch 6, dadurch gekennzeichnet, daß die schichtbildende Einrichtung eine Trennwand aufweist, die in dem Abwassergefäß (1) im wesentlichen waagerecht verläuft und die einen wesentlichen Teil der Innenfläche des Behälters überdeckt.

9. Vorrichtung nach einem der Ansprüche 6 bis 8, dadurch gekennzeichnet, daß der wärmeaufnehmende Rohtleitungsschleifenteil (4a; 4b) in wesentlichen waagerecht liegend angeordnet ist.

10. Vorrichtung nach Anspruch 9, dadurch gekennzeichnet, daß der wärmeaufnehmende Rohrleitungsschleifenteil (4a; 4b) die Form einer im wesentlichen ebenen Spirale hat.

0 047 748

FIG.1

FIG.2